# FASCICULE DE BREVET EUROPEEN

(11) **EP 3 953 127 B1**
(45) Date de publication et mention de la délivrance du brevet: **04.09.2024**
(21) Numéro de dépôt: 20717883.1
(22) Date de dépôt: 10.04.2020
(51) Int. Cl.: B29B 9/12, B29B 9/14, B29B 9/16, B29B 7/60, B29B 7/88, B29B 7/90, B29C 48/00, B29C 48/04, B29C 48/05, B29C 48/40, B29C 48/80, B29C 48/86, B29C 48/875, B29B 9/06, B29B 7/46

(54) **PROCÉDÉ DE PRÉPARATION DE GRANULÉS PLASTIQUES BIOSOURCES ET BIODEGRADABLES**
VERFAHREN ZUR HERSTELLUNG VON AUS BIOLOGISCHEN QUELLEN STAMMENDEN UND BIOLOGISCH ABBAUBAREN KUNSTSTOFFGRANULATEN
METHOD FOR PREPARING BIOSOURCED AND BIODEGRADABLE PLASTIC GRANULES

(30) Priorité: 12.04.2019 FR 1903910
(43) Date de publication de la demande: 16.02.2022
(73) Titulaire: Cabamix, 13440 Cabannes (FR)
(72) Inventeur: CLAUDE, Arnaud, 13550 NOVES (FR)
(74) Mandataire: Plasseraud IP
(86) Numéro de dépôt international: PCT/EP2020/060350
(87) Numéro de publication internationale: WO 2020/208245

(56) Documents cités:
- EP-A1- 1 842 874
- EP-A1- 1 942 140
- EP-A1- 3 415 570
- WO-A1-2012/094758
- US-A1- 2006 229 410
- US-A1- 2007 292 302
- US-A1- 2018 305 542

## Description

### Domaine technique

Le domaine de l'invention est celui des polymères biosourcés et biodégradables, et, plus spécifiquement celui de la formulation et du compoundage de granulés de bioplastiques.

L'invention vise un procédé de préparation de ces granulés extrusion/découpe.

### Technique antérieure

Les granulés plastiques sont des produits semi-finis utilisés en plasturgie, en particulier comme matière première dans les procédés de mise en forme, tels que le thermoformage, l'injection, l'injection soufflage, l'extrusion, l'extrusion gonflage, l'extrusion soufflage, ou l'expansion moulage. Une telle matière première est facile à stocker et à manipuler pour alimenter les machines de transformation plastiques correspondantes. Ces granulés plastiques sont obtenus en préparant une formulation comprenant un polymère thermoplastique, des charges pulvérulentes, et, éventuellement, des plastifiants et des additifs. Cette formulation est ensuite soumise au compoundage, opération qui consiste à extruder le mélange polymère /charges /(plastifiants)/(additifs) pour produire des joncs de quelques millimètres de diamètre. Ces derniers sont ensuite découpés en granulés cylindriques de quelques millimètres de long.

L'utilisation des charges minérales en général, et du carbonate de calcium en particulier, est bien connue dans les matières plastiques conventionnelles. Ces charges contribuent aux qualités mécaniques du plastique, tout en constituant un substitut économique à la matière plastique.

Dans les matières plastiques bioplastiques, l'apport significatif de carbonate de calcium est limité par l'apparition d'un phénomène d'hydrolyse qui conduit à la dégradation des matières bioplastiques.

WO2012094758A1 décrit, par exemple, des compositions de résine d'acide polylactique comprenant 50 à 94,5 % en poids de polymère, 0,5 % à 45 % en poids de plastifiant et 5 à 49,5 % en poids d'une charge minérale, telle que le carbonate de calcium. En pratique, la concentration de carbonate de calcium est seulement de 5 % (exemple 14). Et pour cause, au-delà de 15-20 % en poids, le carbonate de calcium provoque une dégradation accélérée du bioplastique, en l'occurrence l'acide polylactique. L'hydrolyse est l'un des phénomènes susceptibles d'intervenir dans cette dégradation. L'hydrolyse produit une perte de viscosité du mélange qui conduit à l'apparition d'agglomérats dans les matériaux plastiques. Ces agglomérats sont les signes d'une dégradation trop précoce et donc rédhibitoire du bioplastique, qui devient impropre à la fabrication de films ou d'objets massifs en plastique ayant les caractéristiques, notamment, mécaniques requises.

Cette limitation de la quantité de charge minérale, du type carbonate de calcium, utilisable dans les bioplastiques, affecte le gain économique que représente le remplacement du biopolymère par la charge minérale.

En outre, le fait de pouvoir différer l'effet accélérateur de la dégradation du biopolymère par le carbonate de calcium, serait intéressant pour améliorer la biodégradabilité des bioplastiques. On sait en effet que certains bioplastiques comme l'acide polylactique ont une biodégradabilité réduite. Cela signifie qu'ils ne sont compostables que dans les conditions de la norme européenne EN 13432:2000, qui atteste de la biodégradabilité des produits de 90 % en 6 mois dans des conditions de compostage industriel (label TÜV : "OK compost" ou "OK compost industrial"). En revanche, ces bioplastiques ne satisfont pas au label TÜV "OK compost HOME" qui identifie les bioplastiques compostables dans des conditions de compostage "à la maison" (faible volume de déchets/température du bac à compost plus basse et moins constante qu'une température de compostage industriel).

Par ailleurs, dans les applications agricoles des bioplastiques, en plus de limiter le séjour de matières plastiques dans ou sur les sols par accroissement de la biodégradabilité, l'apport d'une charge minérale du type carbonate de calcium pourrait être de nature à favoriser l'enrichissement des sols en carbonate de calcium. Cela serait fort utile pour diminuer l'acidité des sols qui nuit à la fertilité des sols cultivables et qui augmente la biodisponibilité de certains produits toxiques, tels que les métaux lourds, naturellement ou artificiellement présents dans les sols.

WO2018229061A1 (voir aussi le document EP 3415570 A1 cité dans le rapport de la recherche internationale) décrit un procédé de préparation de carbonate de calcium traité en surface par un mélange d'anhydride succinique, l'acide stéarique et d'acide palmitique. Ce carbonate de calcium ainsi traité est incorporé à hauteur de 75 % en poids dans un polyéthylène linéaire basse densité présent à raison de 25 % en poids, pour préparer des granulés de mélange maître par extrusion/découpe. Ce document antérieur ne fait pas allusion à des bioplastiques sujets à des phénomènes de dégradation précoce par hydrolyse.

### Problème technique- Objectifs de l'invention

Dans ce contexte, la présente invention vise à satisfaire au moins l'un des objectifs suivants.

Un objectif de l'invention est de fournir un procédé perfectionné de préparation des granulés de polymère(s) bioplastique(s), par extrusion/découpe.

Un autre objectif de l'invention est de fournir un procédé perfectionné de préparation des granulés de polymère(s) bioplastique(s), par extrusion/découpe, qui permette l'obtention d'au moins l'un des acquis suivants : augmentation de la productivité et de l'efficacité, notamment pour les procédés de transformation par extrusion, et, plus spécifiquement par extrusion soufflage, e.g. en stabilisant la bulle d'extrusion, réduction de la consommation énergétique, gains économiques, facilité de mise en oeuvre.

Un autre objectif de l'invention est de fournir un procédé perfectionné de préparation des granulés de polymère(s) bioplastique(s), par extrusion/découpe, qui permette l'obtention de granulés de polymère(s) bioplastique(s) satisfaisant aux objectifs susdéfinis.

Un autre objectif de l'invention est de fournir un procédé perfectionné de transformation de matières plastiques par lequel la matière première est constituée par des granulés bioplastiques satisfaisant aux objectifs définis dans les paragraphes [0011] à [0018] ou par des granulés de polymère(s) bioplastique(s) obtenus par un procédé satisfaisant aux objectifs susdéfinis.

### Exposé de l'invention

Ces objectifs, parmi d'autres, sont atteints par la présente divulgation qui concerne, en premier lieu, des granulés plastiques (non compris dans la portée des revendications) au moins partiellement biosourcés et au moins partiellement biodégradables comprenant:
(A) au moins un carbonate de calcium pulvérulent dans un pourcentage supérieur à 50 % en poids par rapport à la masse totale des granulés;
(A') éventuellement au moins une charge minérale différente de (A);
(B) au moins un polymère bioplastique;
(C) éventuellement au moins un plastifiant;
(D) éventuellement au moins un additif. Ces granulés ne relèvent pas de l'invention revendiquée.

Il est du mérite des inventeurs d'avoir conçu de nouveaux granulés à haut taux de charge en carbonate de calcium qui permettent de fabriquer industriellement divers objets plastiques biodégradables, tels que les films, des sacs, des emballages alimentaires, des pièces moulées telles que de la vaisselle des gobelets, ... Les granulés selon la divulgation peuvent être utilisés par les transformateurs en extrusion ou en injection, sans que cette transformation ne nuise aux qualités des polymères. En particulier, les granulés selon la divulgation ne sont pas sujets, pendant leur transformation, à des phénomènes de dégradation, notamment par hydrolyse, des polymères biodégradables constitutifs de ses granulés.
En outre, les granulés selon la divulgation donnent en effet accès à des objets qui, non seulement, sont biodégradables et biosourcés, et qui présentent par ailleurs de bonnes propriétés mécaniques, à savoir notamment une rigidité, une résistance à l'impact et une élongation améliorée.
Cette nouvelle matière première bioplastique procure également des avantages en termes esthétiques, et, en particulier, une opacité souhaitable dans un certain nombre d'applications. Le nouveau compound ou mélange maître selon la divulgation est enfin parfaitement adapté aux procédés de transformation des plastiques les plus courants à savoir : le thermoformage, l'injection, l'injection soufflage, l'extrusion, l'extrusion gonflage, l'extrusion soufflage, l'expansion moulage. En effet, il améliore la productivité de ces procédés en les optimisant. Par exemple, en extrusion gonflage et en extrusion soufflage, il permet une stabilisation de la bulle d'extrusion où il sert d'agent "antiblock" pour les bobines de films produites. Un tel agent "antiblock est une solution à deux problèmes majeurs couramment rencontrés dans l'industrie du film (que ce soit lors de sa fabrication ou de son utilisation) : (1) La facilitation de l'enroulement de bobines de film. Lors de l'enroulement du film, des bulles d'air sont piégées entre les spires successives, ce qui génère de petites déformations localisées qui s'amplifient au fur et à mesure de l'empilement des spires. Ces défauts sont appelés «picots». Les bobines ainsi réalisées ne sont plus totalement cylindriques, et le film n'est pas parfaitement plan lors de son déroulement. (2) - L'effet « blocking » résulte de l'adhésion qui se développe entre deux couches lisses de film mises en contact.
Les granulés selon la divulgation permettent également des gains économiques au travers de la consommation d'énergie et de la formulation.

Les caractéristiques exposées dans les paragraphes suivants peuvent, optionnellement, être mises en oeuvre, et ce, indépendamment les unes des autres ou en combinaison les unes avec les autres.

La charge carbonate de calcium (A) est un constituant important du mélange maître que constituent les granulés bioplastiques selon la divulgation.
Ainsi, dans un mode préféré de réalisation, le carbonate de calcium (A) est choisi parmi les carbonates de calcium naturels (en particulier les carbonates de calcium broyés, par exemple marbre, calcaire et/ou dolomite) et/ou synthétiques (en particulier les carbonates de calcium précipité, par exemple vatérite, calcite et/ou aragonite, et/ou les carbonates de calcium ayant réagi en surface), ayant subi un traitement de surface, au moyen d'au moins un anhydride succinique mono substitué et/ou d'au moins un acide carboxylique aliphatique linéaire ou branché, et/ou l'un de ses sels, comprenant de 8 à 24 atomes de carbone, de préférence l'acide stéarique, et, plus préférentiellement encore l'acide stéarique à hauteur d'au moins 10 % en poids ;
et/ou parmi les carbonates de calcium comprenant entre 20 et 85 % en poids, de préférence de 40 à 70 % en poids et très préférentiellement de 50 à 65% en poids, de particules dont le D50 est compris entre, dans un ordre croissant de préférence, 80 nm et 10 microns ; 500 nm et 5 microns ; 800 nm et de microns;
et/ou une charge à base de carbonate de calcium
*ayant un D50 (taille de particules donnée par le volume médian : « volume médian particle size ») comprise entre 5 et 100 microns ; une coupe supérieure (D98) comprise entre 30 et 500 microns et un résidu sur un tamis de 45 microns mesuré selon la norme ISO 787/7 de plus de 0,5 % en poids par rapport au poids total de charge à base de carbonate de calcium ;
*et/ou ayant été soumis par un traitement de surface par au moins un agent en fusion ou à l'état liquide à une température comprise entre 18 et 45 degrés Celsius ;
*et/ou ayant été soumis par un traitement de surface par au moins un agent en fusion ou à l'état liquide à une température comprise entre 18 et 45 degrés Celsius, traitement de surface dans lequel la charge à base de carbonate de calcium est mélangée, en une ou plusieurs étapes avec l'agent de traitement de surface, de telle sorte qu'une couche de traitement de surface comprenant l'agent de traitement de surface et/ou des produits de réaction de cet agent de traitement de surface, se forme sur la surface de la charge à base de carbonate de calcium ; cette dernière ayant un D50 (taille de particules donnée par le volume médian) comprise entre 5 et 100 microns ; une coupe supérieure (D98) comprise entre 30 et 500 microns ; et un résidu sur un tamis de 45 microns mesuré selon la norme ISO 787/7, de plus de 0,5 % en poids par rapport au poids total de charge à base de carbonate de calcium ;
cette charge à base de carbonate de calcium ainsi traitée ayant un résidu sur un tamis de 45 microns mesurés selon la norme ISO 787/7, de plus de 0,5 % en poids par rapport au poids total de la charge à base de carbonate de calcium ;
cet agent de traitement de surface étant, de préférence, un mélange d'esters d'un ou plusieurs monoesters d'acide phosphorique et/ou d'un ou plusieurs diesters d'acide phosphorique ; et/ou au moins un anhydride succinique mono-substitué avec un groupement choisi parmi les groupements linéaires branchés et aliphatiques ayant un nombre total d'atomes de carbone d'au moins 2 à 20 dans le substituant ou un groupement cyclique ayant un total d'atomes de carbone d'au moins 3 à 20 dans le substituant ;
et/ou cet agent traitement de surface étant, de préférence, ajouté à la charge à base de carbonate de calcium dans une proportion comprise entre 0,1 et 3 % en poids, de préférence entre 0,1 et 2 % en poids et, plus préférentiellement encore, entre 0,1 et 1,5 % en poids, par rapport au poids total sec de la charge à base de carbonate de calcium.

Avantageusement, le polymère bioplastique (B) est choisi parmi les polyesters, de préférence dans le groupe comprenant - idéalement constitué par - l'acide polylactique (APL), le polybutylène adipate téréphtalate (PBAT), le polybutylène succinate (PBS) et leurs mélanges.

Selon une caractéristique intéressante de la divulgation, le plastifiant (C) est choisi parmi les esters, les esters d'acides carboxyliques, les esters de glycérine, les diesters d'isosorbide, les esters à base d'huiles végétales, les esters à base de polyols d'origine végétale, l'ester de polyols époxydés, les huiles végétales modifiées, les huiles de soja modifiées, les huiles végétales époxydées, les esters polymères, les esters d'acides gras, les adipates, les polyadipates, les bis(2-ethylhexyl)adipates, les citrates, les acétyltributylcitrates, les monoglycérides acétylés, les phosphates, les trimellitates, les malates, les succinates, les sébaçates, les stéarates, les azélates, les plastifiants oligomères et polymères oligomères et leurs mélanges, les lubrifiants, les cires les lubrifiants à base d'éthylène bis-stéaramide d'éthylène bis-oléamide et leurs mélanges; les stéarates, en particulier les stéarates de calcium ou de zinc étant particulièrement préférés.

Selon une autre caractéristique remarquable de la divulgation, l'additif (D) est choisi parmi les dessiccants, de préférence choisi parmi oxyde de calcium, chlorure de calcium, chlorure de cobalt, chlorure de lithium, chlorure de sodium, oxyde de calcium, et leurs mélanges, des minéraux tels que quartz, mica, kaolin, phosphate de calcium, feldspath, stéatite, craie, marbre, dolomite, hydroxyde d'aluminium, hydroxyde de magnésium, talc, noir de carbone, silice synthétique, sulfate de baryum, ferrite de baryum, des pigments et des colorants, des stabilisants, des ignifugeants halogénés ou non-halogénés, des modificateurs d'impact.

De préférence, les granulés ont l'une au moins des caractéristiques suivantes :
(i)-forme cylindrique de longueur comprise entre 2 et 10 mm, de préférence entre 3 et 5 mm et de diamètre compris entre 1 et 6 mm de préférence entre 2 et 4 mm ;
(ii)- indice de fluidité à chaud (IFC) mesuré sous un poids de 2,16 kg selon la norme ISO 1133:1997, inférieur ou égal à 10 g/10 min; de préférence compris entre 3 et 9 et, plus préférablement encore, entre 4 et 8;
(iii) taux d'humidité inférieur ou égal à - en % en poids et dans un ordre croissant de préférence - : 0,20 ; 0,15 ; 0,10 ; 0,05 ; 0,04;
(iv) densité apparente [Norme ISO 1183] entre 1,4 et 2,0 g/cm² , de préférence entre 1,5 et 1,8 g/cm² et, plus préférablement encore entre 1,6 et 1,7 g/cm² ;
(v) absence de colmatage dans un test de filtration TF réalisée selon une méthode M^{TF}.

L'invention est relative à un procédé selon la revendication 1 de préparation de granulés plastiques au moins partiellement biosourcés et au moins partiellement biodégradables, par extrusion/découpe, comprenant les étapes suivantes:
- (1)- mise en oeuvre d'au moins un polymère bioplastique (B), de préférence choisi parmi les polyesters, et, plus préférablement encore dans le groupe comprenant - idéalement constitué par - l'acide polylactique (APL), le polybutylène adipate téréphtalate (PBAT), le polybutylène succinate (PBS) et leurs mélanges;
- (2)- éventuel séchage de (B) pour amener/maintenir son taux d'humidité [mesuré selon la norme ISO 787-2] à une valeur maximale de - en % en poids par rapport à la masse totale de (B) et dans un ordre croissant de préférence- 0,05 ; 0,04 ; 0,03 ; 0,02 ; 0,01;
- (3)-transfert de (B), éventuellement séché, vers une extrudeuse, de préférence au moyen d'un flux d'air sec dont le degré d'humidité est, de préférence, inférieur ou égal à 30%, et plus préférentiellement encore à 10%;
- (4)- éventuel mélange de (B) avec au moins un plastifiant (C) et/ou au moins un additif (D) ;
- (5)- introduction dans l'extrudeuse, de préférence une extrudeuse bi-vis ;
   * de (B), dont le taux d'humidité [mesuré selon la norme ISO 787-2] est inférieur ou égal à - en % en poids par rapport à la masse totale de (B) et dans un ordre croissant de préférence- 0,05 ; 0,04 ; 0,03 ; 0,02 ; 0,01, éventuellement préalablement mélangé à (C) et/ou à (D);
   * et, éventuellement, d'au moins un plastifiant (C) et/ou d'au moins un additif (D); la zone Z1 de l'extrudeuse dans laquelle a lieu cette introduction, étant à une température T1 telle que : 40°C ≤ T1 ≤ 80°C ; de préférence 50°C ≤ T1 ≤ 70°C ; et, plus préférentiellement encore 55°C ≤ T1 ≤ 65°C;
- (6)- extrusion de (B), et, le cas échéant, mélange avec (C) et/ou avec (D), fondu(s), dans une zone Z2 de l'extrudeuse à une température T2, telle que : 120°C ≤ T2 ≤ 210°C ; de préférence 140°C ≤ T2 ≤ 190°C ; et, plus préférentiellement encore 150°C ≤ T2 ≤ 180°C;
- (7)- introduction de (A) dans l'extrudeuse, en au moins une fois et à au moins une zone Z, de préférence à deux zones Z3, Z4, ou trois zones Z3, Z4, Z5, de l'extrudeuse; chacune de ces zones Z3, Z4, Z5 de l'extrudeuse étant à une température Tx, identique ou différente - de préférence identique - et telle que: 120°C ≤ T2 ≤ 210°C ; de préférence 140°C ≤ T2 ≤ 190°C ; et, plus préférentiellement encore 150°C ≤ T2 ≤ 180°C;
- (8)- transfert sous pression de l'extrudat vers une filière, de préférence au moyen d'une extrudeuse monovis dans une zone Z'1 de laquelle règne une température T'1 telle que : 130°C ≤ T'1 ≤ 200°C ; de préférence 140°C ≤ T'1 ≤ 190°C ; et, plus préférentiellement encore 150°C ≤ T'1 ≤ 180°C;
- (9)-passage de l'extrudat transféré sous pression dans une filière à la sortie de laquelle on récupère un produit extrudé, comprenant, de préférence, au moins un jonc; la filière étant chauffée à une température Tf telle que : 160°C ≤ Tf ≤ 260°C ; de préférence 180°C ≤ Tf ≤ 240°C ; et, plus préférentiellement encore 200°C ≤ Tf ≤ 220°C;
- (10)-éventuel refroidissement du produit extrudé;
- (11)- découpe en granulés du produit extrudé, de préférence, au moyen d'un granulateur sous eau, à une température T4 comprise entre 30 et 80 °C, de préférence entre 40 et 60 °C;
- (12)- séchage des granulés, de préférence, au moyen d'une centrifugeuse ;
- (13)- éventuel tamisage des granulés;
- (14)- éventuel séchage additionnel des granulés;
- (15)- conditionnement en conteneur(s) étanche(s) des granulés.

La divulgation concerne également un objet plastique transformé (non compris dans la portée des revendications), en particulier un film, de préférence obtenu par thermoformage, injection, injection soufflage, extrusion, extrusion gonflage, extrusion soufflage, ou expansion moulage, à partir des granulés plastiques selon la divulgation, et/ou par des granulés plastiques obtenus par le procédé selon l'invention. Cet objet plastique transformé, pourtant fortement chargé en carbonate de calcium (au-delà de 15-20% en poids), est remarquable en ce qu'il ne présente aucune dégradation de ses propriétés mécaniques.

Un autre objet de la divulgation est l'utilisation du carbonate de calcium (A) tel que défini dans le présent exposé (et non compris dans la portée des revendications), à titre de charge dans des granulés comprenant au moins un polymère bio-plastique (B) tel que défini dans le présent exposé, pour réduire significativement voire supprimer la dégradation, en particulier des propriétés mécaniques, et, notamment par hydrolyse, du matériau plastique constitué par les granules lors de sa transformation, par exemple par thermoformage, injection, injection soufflage, extrusion, extrusion gonflage, extrusion soufflage, expansion moulage, en objets plastiques de formes diverses. Cette utilisation ne relève pas de l'invention revendiquée. Avantageusement, cette utilisation est mise en oeuvre avec un pourcentage de charges de carbonate de calcium (A) au moins égale à 15 - 20 % en poids par rapport à la masse totale des granulés.

### Définitions:

Dans tout le présent exposé, tout singulier désigne indifféremment un singulier ou un pluriel. Les définitions données ci-après à titre d'exemples, peuvent servir à l'interprétation du présent exposé :
"*plastique biosourcé*": désigne un plastique constitué de polymère(s) totalement ou partiellement issus de ressources renouvelables: végétale, animale, résiduelle, algale...
"*Plastique biodégradable*": désigne un plastique qui peut être totalement ou partiellement décomposé sous l'action de micro-organismes (bactéries, champignons, algues...). Le résultat de cette décomposition est la formation d'eau, de CO₂ et/ou de méthane et éventuellement de sous-produits (résidus, nouvelle biomasse) non toxiques pour l'environnement. Par exemple, *un plastique biodégradable* est compostable dans les conditions de la norme européenne EN 13432:2000, qui atteste de la biodégradabilité des produits de 90 % en 6 mois dans des conditions de compostage industriel (label TÜV : "OK compost" ou "OK compost industrial").
"*polymère*": désigne un homopolymère ou un copolymère constitué d'au moins deux monomères différents.
"*Polymère thermoplastique"*, désigne une matière qui devient malléable et pliable au-dessus d'une température donnée, la température de transition vitreuse Tg, mais qui en dessous de cette Tg redevient dure, ces transformations étant réversibles.
"*Dx*": est la valeur de taille de particules d'une poudre, en particulier d'une charge comme par exemple le carbonate de calcium, telle que x % en poids des particules ont une taille supérieure à cette valeur et les 100 - x % en poids restants des particules ont une taille inférieure à cette valeur; X pouvant être égal à 20 à 50 ou à 98. La taille des particules est déterminée à l'aide d'un granulomètre Sedigraph^{®} 5100 ou 5120, commercialisé par la société Micromeritics Instrument Corporation. La mesure avec ce granulomètre est réalisée selon les pratiques usuelles selon les recommandations du fabricant, et, en particulier dans une solution aqueuse de Na₄P₂O₇. Les échantillons sont dispersés au moyen d'un agitateur à vitesse, puis soniqués.
"*taux d'humidité*" mesuré selon la norme ISO 787-2.
"*densité apparente*" mesurée selon la norme ISO 787-11.
"*test de filtration TF réalisé selon une méthode M^{TF}*" : confer la description dans les exemples
"*entre x et y*", signifie que les bornes *x* et *y* sont incluses dans l'intervalle [*x*, *y*]. "*plastifiant"* désigne une substance permettant d'abaisser la température de transition vitreuse Tg du plastique.
"*additif*" désigne notamment un colorant, un pigment, un catalyseur, un durcisseur un ignifugeant, un stabilisant, un lubrifiant, un antistatique, un modifiant choc, un agent de mise en oeuvre ou un fongicide.

### Brève description des dessins

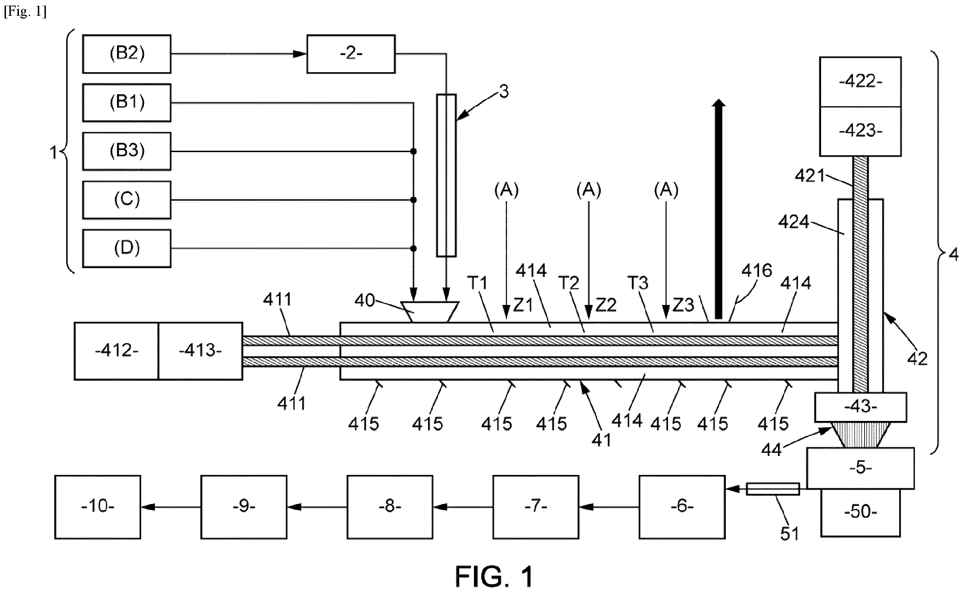

D'autres caractéristiques, détails et avantages de l'invention apparaîtront à la lecture de la description détaillée ci-après d'exemples de réalisation des granulés constituant le mélange maître selon la divulgation ainsi qu'un exemple de mise en oeuvre du procédé selon l'invention au moyen du dispositif montré sur la figure unique annexée dans laquelle : **Fig. 1**
[Fig. 1] est un schéma du dispositif de mise en oeuvre du procédé de préparation par extrusion/découpe des granulés selon l'invention, mis en oeuvre dans les exemples.

### Description détaillée

### Les granulés

Le carbonate de calcium (A) sélectionné conformément à la divulgation est d'un type particulier, de préférence traité en surface par des composés hydrophobes, tels que des acides mono ou polycarboxyliques, et/ou par des anhydrides de ces acides carboxyliques, et/ou par des sels de ces acides carboxyliques.

Dans un mode privilégié de réalisation, ce traitement de surface est effectué au moyen d'au moins un anhydride succinique mono substitué et/ou d'au moins un acide carboxylique aliphatique, linéaire ou branché, et/ou l'un de ses sels, comprenant de 8 à 24 atomes de carbone, de préférence l'acide stéarique, et, plus préférentiellement encore l'acide stéarique à hauteur d'au moins 10 % en poids.

Par exemple, le carbonate de calcium peut être traité en surface avec de l'anhydride succinique (e.g. CAS No. 68784-12-3) et avec un mélange 1:1 acide stéarique: l'acide palmitique.

Avantageusement, le carbonate de calcium (A) est choisi dans le groupe des carbonates de calcium broyé, préférablement issus de marbre, de calcaire, de dolomite et/ou de craie ; et/ou dans le groupe des carbonates de calcium précipités, préférablement dans le sous-groupe comprenant la vaterite, la calcite et/ou l'aragonite; et/ou dans le groupe des carbonates de calcium traités par une réaction de surface ; et/ou dans des mélanges de ceux-ci.

Selon une possibilité, au moins l'un des carbonates de calcium (A) possède au moins l'une des caractéristiques suivantes :
(i) une distribution de granulométrique telle que le D50 soit compris entre 0,1 et 7 microns, de préférence entre 0,25 et 5 microns et, plus préférablement encore entre 0,5 et 4 microns ;
(ii) une distribution de granulométrique telle que le D98 soit inférieur ou égal à 50 microns, de préférence inférieure ou égale à 40 microns, plus préférablement inférieur ou égal à 25 microns, et, encore plus préférablement inférieur ou égal à 15 microns ;
(iii) une surface spécifique BET de 0,5 à 150 m² par gramme, de préférence de 0,5 à 50 m² par gramme, plus préférablement de 0,5 à 35 m² par gramme, et, plus préférablement encore de 0,5 à 10 m² par gramme, cette surface spécifique BET étant mesurée par la méthode dans laquelle on utilise ledit azote comme adsorbat ;
(iv) un taux d'humidité comprise entre 0,01 et 1 % en poids de préférence entre 0,01 et 0,2 % en poids, plus préférablement entre 0,02 et 0,2 % en poids, et, plus préférablement encore entre 0,04 et 0,2 % en poids, par rapport au poids total sec du carbonate de calcium. Avantageusement, le carbonate de calcium (A) peut être celui décrit dans la demande PCT WO2018229061A1 ou WO2020064968A1.

Comme exemples de produits commerciaux on peut citer, entre autres, le carbonate de calcium Smartfill^{®} OM 55 produits commercialisés par la société OMYA^{®}

Les charges (A') susceptibles d'être combinées au CaCo3 (A) peuvent être notamment:
- des charges minérales : quartz, mica, kaolin, phosphate de calcium, feldspath, stéatite, craie, marbre, dolimie, hydroxyde d'aluminium, hydroxyde de magnésium, talc, noir de carbone, silice synthétique, sulfate de baryum, ferrite de baryum, etc. ;
- des charges organiques : farine de bois ou d'écorce de fruit, pâte de cellulose, etc. ;
- des charges renforçantes fibreuses : fibre de verre ;
- des charges renforçantes non fibreuses :microsphères de verre creuses, silice synthétique ;
- argile nanométrique, céréales, lin.

Le polymère bioplastique (B) peut-être l'acide polylactique par exemple celui commercialisé sous la dénomination PLA Luminy^{®} L175 par la société TOTAL-CORBION et présentant les caractéristiques données dans les exemples ci-après.

Le PBAT est un copolymère statistique biodégradable, en particulier un copolyester d'acide adipique, de butanediol-1,4 et d'acide téréphtalique. Le PBAT peut être par exemple celui commercialisé sous les noms de marque ecoflex^{®}, Wango^{®}, Ecoworld^{®}, Eastar Bio^{®} et Origo-Bi^{®}.

Le PBS est un polybutylène succinate produit par polymérisation d'acide succinique biosourcé et de 1,4 butanediol. Il s'agit d'un polyester thermoplastique semi cristallin souple et mou, analog au polypropylène. À titre d'exemple on peut citer les PBS commercialisé sous les marques BioPBS^{®} FD92PM / FD92PB ou BioPBS^{™} FZ91PM / FZ91PB par la société PTT MCC Biochem Company Limited.

Outre les (co)polyesters, et en particulier l'APL, le PBAT et/ou le PBS, le polymère bioplastique (B) pourrait être choisi parmi les polyhydroxyalcanoates (PHA), les polycaprolactones, et/ou les polymères à base d'amidon et/ou de cellulose.

Les additifs (D) sont avantageusement des dessicants de préférence choisis parmi: CaO, chlorure de calcium, chlorure de cobalt, chlorure de lithium, chlorure de sodium, oxyde de calcium, et leurs mélanges. CaO est particulièrement préféré.
CaO peut être avantageusement apporté sous la forme d'un mélange comprenant entre 50 et 90 %, par exemple 70%, de CaO des bioplastiques qsp. Le taux d'incorporation de ce type de mélange peut être compris entre 0,2 et 3 % en poids sec par rapport à la masse totale des granulés. Ce taux peut être par exemple de 0,35 % +/- 0,05 % ou de 2 % +/-0,2 %.

Ces granulés sont avantageux par leurs "*processabilités*" dans les procédés de transformation de matières plastiques, et notamment en extrusion. Ils améliorent la productivité. Ils permettent la stabilisation de la bulle d'extrusion. Ils réduisent la consommation énergétique ainsi que les coûts de formulation.
Par ailleurs, les objets plastiques finis obtenus à partir des mélanges maîtres constitués par ces granulés, sont dotés de bonnes propriétés mécaniques : rigidité, résistance impact, élongation. Ils ont également un aspect opaque intéressant.
Les objets plastiques finis obtenus avec ces granulés ont un contact alimentaire conforme à la directive du 2011/10/EC. Ils sont compatibles avec l'environnement. Ils sont économiques, recyclables et biodégradables au moins selon le label TÜV : "OK compost" ou "OK compost industrial", voire selon le label TÜV "OK compost HOME"

### Procédé de préparation des granulés bioplastiques

Comme indiqué ci-avant ce procédé comprend les étapes 1,3, 5,6 - 9,11, 12 et 15, ainsi que les étapes facultatives 2, 4,10,13 et 14.

Le procédé selon l'invention a ceci de performant qu'il permet de maîtriser le taux d'humidité des matières premières au cours du procédé.

Il est ainsi préférable que ce taux soit amené ou maintenu en dessous de 0,03 %, de préférence 0,025 %, et, mieux encore 0,01 % par rapport à la masse totale de la matière première considérée, pour l'introduction dans l'extrudeuse.

Il est également souhaitable, conformément à l'invention, de limiter le temps d'exposition des matières premières sèches, à l'air ambiant. Ainsi, ce temps d'exposition est préférablement inférieur à 10 minutes et mieux encore à 5 minutes.

Les granulés finis sont emballés dans des conditionnements (sacs) étanches, pour les conserver au sec à l'abri de l'air ambiant. L'additif (D) constitué par l'oxyde de calcium CaO (chaux vive) est un atout incontestable pour limiter ce phénomène de reprise en eau éventuelle.

On décrit ci-après un mode préféré de réalisation du dispositif selon l'invention.

### Dispositif pour la mise en oeuvre du procédé selon l'invention :

Comme cela apparaît sur la figure 1, le dispositif de fabrication par extrusion/découpe du mélange maître de bio plastique constitué par des granulés selon la divulgation, comprend :
- une station d'alimentation 1 concernant partie des matières premières de fabrication (B)(C)(D), voire (A');
- un sécheur amont 2;
- un transporteur 3 sous air sec
- une station d'extrusion 4 comportant en ligne une première extrudeuse bivis 41, une deuxième extrudeuse monovis 42, un filtre 43 et une filière 44;
- une station de découpe 5 comprenant un granulateur sous eau;
- un sécheur aval 6 comprenant un centrifugeuse;
- un tamis 7;
- un sécheur aval additionnel 8;
- un ensacheur 9;
- un lieu de stockage 10.

Dans cet exemple, un sécheur amont 2 est prévu pour amener ou maintenir, en dessous d'un plafond, par exemple de 0,01 %, le taux d'humidité de certaines des matières premières, en l'occurrence (B2) sur la figure 1. Ce sécheur amont 2 peut-être une unité de séchage de granulés sous air chaud et sec, tel que LUXOR produit par la société MOTAN ou DEHUMIDIFYING DRYER produit par la société PIOVAN. Le transporteur 3 sous air sec permet de transférer vers la station d'extrusion 4, la poudre (B2) séchée dans le sécheur amont 2 en évitant/limitant la reprise en eau de la poudre (B2). Ce transporteur sous air chaud et sec peut être fourni par les sociétés MOTAN ou PIOVAN.

Les autres matières premières (B)(C)(D), voire (A') sont acheminées vers la station d'extrusion 4, directement ou par l'intermédiaire de conduits dans laquelle les poudres, voire les liquides, (B)(C)(D), voire (A') sont susceptibles de circuler sous un flux de fluide gazeux ou liquide sous pression.

L'alimentation de la station d'extrusion 4 s'effectue par une trémie 40 équipée d'un doseur à vis enfin dans montré sur la figure 1.

L'extrudeuse bivis 41 de la station d'extrusion 4 comporte deux vis 411 mues par un moteur 412 et un réducteur 413, à l'intérieur d'un fourreau chauffant 414 équipés de résistances chauffantes 415, permettant d'effectuer un chauffage différencié de différentes zones de l'extrudeuse 41.

L'introduction de carbonate de calcium (A) s'opère dans 3 zones successives Z1, Z2, Z3 de l'extrudeuse bivis 41, au moyen de distributeurs latéraux "side-feeders" équipés chacun d'un doseur pondéral est symbolisé par des flèches dirigées vers le bas sur la figure 1. Les zones Z1, Z2, Z3 de l'extrudeuse 41 sont susceptibles d'être chauffées à des températures T1, T2, T3 par le fourreau chauffant 414.

L'extrudeuse bivis 41 présente également un évent 416 permettant d'effectuer un dégazage symbolisé par une flèche dirigée vers le haut sur la figure 1.

L'extrudeuse bivis 41 débouche dans l'extrudeuse monovis 42, de direction orthogonale par rapport à l'extrudeuse bivis 41. Cette extrudeuse monovis 42 comprend une vis 421 susceptible d'être entraînée en rotation par un moteur 422 et un réducteur 423. La vis 421 s'étend à l'intérieur d'un fourreau 424 chauffant équipé de résistances non montrées sur la figure 1.

Un filtre 43 et une filière 44 sont successivement disposés à la sortie de l'extrudeuse monovis 42. Le filtre 43 est par exemple constitué par un filtre en inox 2 couches dont une en 18 mesh et l'autre en 35 mesh La filière 44 est par exemple du Type 2000 produit par Nordson BKG GmbH une filière 80 trous ayant chacun un diamètre égal à 3,2 mm.

Le granulateur sous eau 5 est, par exemple, du type de ceux comportant un porte-couteau rotatif actionnable par un moteur 50. Il peut s'agir notamment du granulateur sous eau commercialisé par la société Nordson BKG GmbH sous la dénomination Coupe sous eau BKG

Le transfert des granulés produit par le granulateur 5, vers la centrifugeuse 6 de séchage aval est effectué dans un conduit 51 dans lequel circule un flux d'eau à température contrôlable. La centrifugeuse 6 peut-être type de celles commercialisées par la société Nordson BKG GmbH sous la dénomination BKG Opti-LineLe tamis 7 peut être du type de ceux commercialisés par la société SCHENK PROCESS sous la dénomination LinaClass

Le sécheur aval additionnel 8 facultatif (non mis en oeuvre dans l'exemple décrit ci-dessous) peut être du type de ceux commercialisés par la société MOTAN sous la dénomination LUXOR

L'installation d'ensachage 9 est, par exemple, du type de celles commercialisées par la société PAGLIERANI sous la dénomination ensacheuse rotative.

### Exemples

### Exemple 1

### Produits utilisés:

• (A) 65% de CaCO3 (Smartfill^{®} OM 55, produit OMYA) constitué par une poudre de carbonate de calcium finement broyée et traitée. 55 % des particules de cette poudre ont une taille inférieure à 2 microns (mesure granulométrique Sedigraph 5120). La brillance Ry (C/2°, DIN 53163) de cette poudre est de 94 % ; son taux d'humidité (ISO 787-2) sortie usine est de 0,1 % et sa densité apparente (ISO 787-11) est de 1,1 g/ml.
• (B):
- (B1) 24,8% d'un co-polyester aliphatique-aromatique, statistique, biodégradable et obtenu à partir des monomères suivants : 1,4-butanediol, acide adipique et acide téréphthalique commercialisé sous la dénomination ECOFLEX F BLEND C1200 par la société BASF. 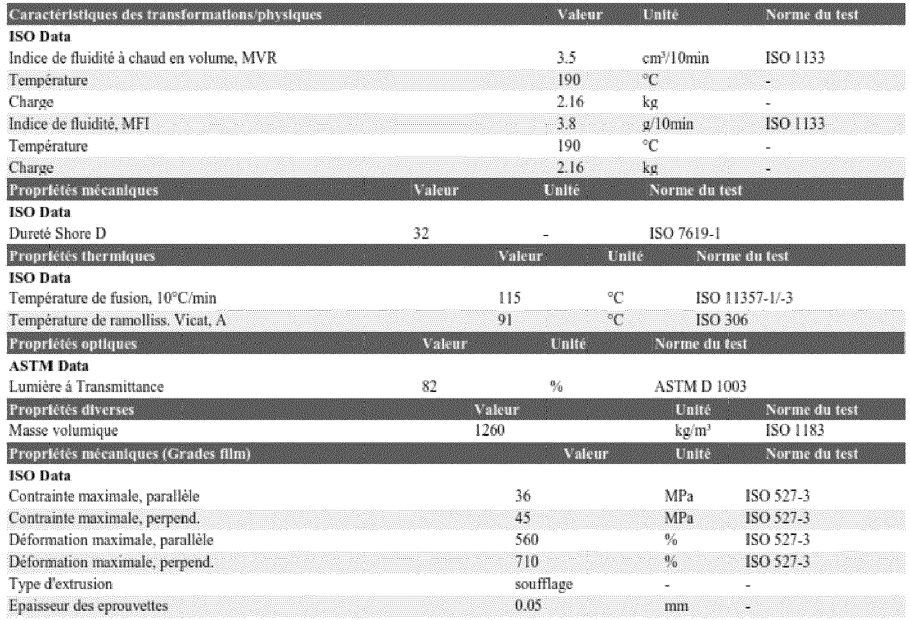
- (B2) : 10% d'acide polylactique commercialisé sous la dénomination PLA Luminy^{®} L175 par la société TOTAL-CORBION et présentant les caractéristiques suivantes :

| **Propriétés physiques** | **Méthode** | **Valeur type** |
|---|---|---|
| Densité | Valeur de la littérature | 1.24 g/cm³ |
| Indice de Fluidité à Chaud (MFI) | ISO 1133-A(210°C/2.16kg) | 8 g/10 mn |
| Indice de Fluidité à Chaud (MFI) | ISO 1133-A(190°C/2.16kg) | 3 g/10 mn |
| Stéréo chimique purité | Méthode Total^{®}Corbion^{®} APL | ≥ 99% (isomère L) |
| Apparence | Visuelle | Boulettes blanches cristallines |
| Monomère résiduel | Méthode Total^{®}Corbion^{®} APL | ≤ 0,3% |
| Eau/Humidité | Karl-Fischer coulométrique | ≤ 400 ppm |
| Température de fusion | DSC | 175°C |
| Température de transition vitreuse | DSC | 55-60°C |

| **Propriétés mécaniques** | **Méthode** | **Valeur type** |
|---|---|---|
| Module en traction | ISO 527-1 | 3500 MPa |
| Résistance à la traction | ISO 527-1 | 50 MPa |
| Elongation à la rupture | ISO 527-1 | ≤ 5% |
| Essai de flexion par choc sur éprouvette entaillée Charpy 23°C | ISO 179-1eA | ≤ 5kj/m2 |
| Température de fléchissement sans charge, amorphe | ISO 75-1 | 55-60°C |
| Température de fléchissement sans charge, cristalline | ISO 75-1 | 100-110°C |

• (C) plastifiant : 0,2% de Stéarate de calcium VEG commercialisé par la société FACI.

### Procédé :

*Étape (1)* : Mise en oeuvre de PLA (B2)
*Etape (2)* : On sèche (B2) à l'aide d'une unité de séchage sous air chaud et sec.
*Étape (3)* : On envoie (B2) séché dans une trémie d'alimentation sous air sec.
*Étape (5):* Cette trémie vient alimenter en (B2), à l'aide d'un doseur pondéral, le point de départ (zone Z1) de l'extrudeuse bi-vis co-rotative chauffée à T1 = 60°C.
   On introduit également à l'aide d'un doseur pondéral le co-polyester (B1) aliphatique-aromatique et le stéarate de calcium (C) au même point de départ (zone Z1) de l'extrudeuse bi-vis co-rotative chauffée à T1 = 60°C.
*Étape (6)*: Dans la zone Z2 suivante de l'extrudeuse, les matières (B1)(B2) et (C) sont fondues à 150°C puis 160°C et mélangées.
*Étape (7)*: Ce mélange (B1)(B2)(C) parvient ensuite dans 3 zones successives Z3, Z4, Z5 chauffées à Tx compris entre 160°C et 170 °C et dans lesquelles est introduit le CaCO3 (A), à l'aide de distributeurs latéraux "side-feeders" équipés chacun d'un doseur pondéral. En regard de chaque "side-feeder", à l'intérieur de l'extrudeuse, sont prévus des éléments de malaxage et de transport vers l'aval. Les fourreaux de l'extrudeuse bi-vis sont refroidis pour maîtriser la température et éviter l'auto-échauffement lié au procédé.
*Étape (8):* A la sortie de l'extrudeuse bivis, le mélange (A)(B 1)(B2)(C) est repris par une monovis chauffée à 190°C, qui permet de monter en pression avant de passer dans un filtre.
*Étape (9)*: Le mélange (A)(B 1)(B2)(C) passe ensuite dans une filière comportant 80 trous, chacun d'un diamètre de 3,2 mm, pour produire en sortie 80 joncs. Cette filière est chauffée à 210°C. La monovis est également refroidie pour éviter l'auto-échauffement.
*Étape (11)*: Un système de granulation sous eau comprenant un porte-couteaux rotatif, refroidit et découpe les joncs en granulés. Ces granulés sont transportés dans une eau à 55°C en circuit fermé vers la station suivante de séchage.
*Étape (12)*: La station de séchage comprend une centrifugeuse à la sortie de laquelle on récupère des granulés secs.
*Étape (13):* Ces granulés passent alors sur un tamis vibrant qui permet de séparer les éventuels déchets fins de découpe des granulés.
*Étape (15)*: Les granulés sont ensuite transférés vers une ligne d'ensachage où l'on procède à leur conditionnement en sacs étanches.

Pour la production d'une tonne par heure, on consomme donc chaque heure 650 kg de CaCO3 (A), 248 kg de co-polyester (B1), 100 kg de PLA (B2) et 20 kg de stéarate de calcium (C).

### Évaluation des granulés ainsi obtenus :

(i)-forme cylindrique de longueur comprise de l'ordre de 4 mm et de diamètre de l'ordre de 3,2 mm ;
(ii)- indice de fluidité à chaud (IFC) mesuré sous un poids de 2,16 kg selon la norme ISO 1133:1997, égal 5 +/- 1;
(iii) taux d'humidité ISO 787-2 égal à 0,04 % en poids;
(iv) densité apparente ISO 787-11 = 1,6 - 1,7 g/cm² ;
(v) absence de colmatage dans un test de filtration TF réalisé selon une méthode M^{TF}, tous deux décrits ci-après :

Ce test consiste en une simulation d'extrusion pour évaluer la dispersion minérale dans les granulés bio-plastique. Ce test est réalisé sur un dispositif commercial dénommé :" Collin Pressure Filter Test Teach-Line FT-E20T-IS". La vitesse de la vis d'extrusion est fixée à 100 tr/min. La température de fusion est comprise entre 225 230 °C (les températures de consigne de l'extrudeuse sont de : 190 - 210 - 230°C / la température de consigne de la filière est de 230 °C).

Le filtre mis en oeuvre est un filtre de 40 microns fourni par GKD Gebr. Kufferath 25 AG, Duren, Germany, Artikelnummer 12102170055.

Le constat d'un colmatage se fait au travers d'une augmentation de la pression au-dessus d'un plafond fixé par le constructeur du dispositif:" Collin Pressure Filter Test Teach-Line FT-E20T-IS".

### Exemple 2

Des essais de compoundage (production granulés) sont effectués sur une formulation témoin FT comprenant 35 % en poids d'un acide polylactique PLA (B2) défini dans l'exemple 1 et 65 % en poids d'un carbonate de calcium standard non traité OMYAFILM 711-OG (témoin) et sur une formulation selon l'invention FI comprenant un acide polylactique PLA (B2) défini dans l'exemple 1 et le carbonate de calcium (A) mis en oeuvre selon invention et défini dans l'exemple 1.

Le procédé mis en oeuvre pour obtenir des granulés FT et FI est celui décrit à l'exemple 1.

Le PLA (B2) utilisé est étuvé pendant une nuit complète à 60°C. Sous une charge de 2,16 kg à 210°C, on mesure l'indice de fluidité en fondu « Melt Flow Index » selon la norme NF EN ISO 1133-méthode B, ci-après dénommé « MFI », s'élève en moyenne à 7,04 g/10 min.

Le compoundage (production de granules) de la formulation FT est réalisé dans une extrudeuse bivis corotative avec le carbonate de calcium témoin.

Le MFI mesuré dans les mêmes conditions que celles indiquées au paragraphe [0051], s'élève à **24,10 g/10min,** traduisant une perte de viscosité très importante, qui le rend impropre à la transformation.

Le compoundage de la formulation FI est réalisé dans la même extrudeuse avec un profil de vis et des températures identiques. Le MFI mesuré dans les mêmes conditions que celles indiquées au paragraphe [0052], s'élève à **10,4 g/10min,** traduisant une faible perte de viscosité qui le rend apte à être transformé.

Le test de filtration TF (filter test 14µm) réalisé selon une méthode M^{TF} décrit au § [0048] point (v) est réalisé sur les granulés de formulation FI. On obtient une valeur de **0,08 bar/g,** très basse, traduit une absence de colmatage. La qualité du mélange entre le carbonate de calcium mis en oeuvre selon l'invention et le PLA B2 est excellente, ce qui signifie une absence d'agglomérats dans les granules et donc un gage d'une bonne qualité, notamment mécanique, pour les produits plastiques transformés obtenus à partir de ces granulats.

### Exemple 3

Dans cet exemple, on produit des granulés de formulation FI0 dans laquelle le PLA (B2) est remplacé par un matériau polymère à base de copolymère de butylène/adipate/téréphthalate PBAT , biodégradable, ayant une densité de 1,6 g par centimètre cube à température ambiante un MFI compris entre 3 et 5 dg par minute (ISO 1133,190 °C/2,16 kg), une température de transmission vitreuse de -30°C, une température de fusion comprise entre 110 et 120 °C, et un degré cristallinité compris entre 10 et 15 pour cent. Il s'agit du produit commercialisé par la société BASF sous la dénomination EcoFlex^{®} FC 1200, également décrit dans l'exemple 1 : B1.
La formulation FI0 comprend 35 % en poids d'EcoFlex^{®} FC 1200 et 65% en poids de carbonate de calcium (A) mis en oeuvre selon l'invention et défini dans l'exemple 1.

Les granulés de formulation FI0 sont obtenus par le procédé défini à l'exemple 1.

Le MFI mesuré dans les mêmes conditions que celles indiquées au paragraphe [0052] à l'exception de la température qui est de 190° C au lieu de 210°C, s'élève à **1,5 g/10min,** traduisant une très faible perte de viscosité qui le rend apte à être transformé.

Dans le test de filtration TF (filter test 14µm) selon une méthode M^{TF} décrit au § [0048] point (v), les granulés de formulation FI0 ont une valeur de **0,21 bar/g,** très basse, qui traduit une absence de colmatage. La qualité du mélange entre le carbonate de calcium mis en oeuvre selon l'invention et le PBAT EcoFlex^{®} FC 1200 est excellente, ce qui signifie une absence d'agglomérats dans les granules et donc un gage d'une bonne qualité, notamment mécanique, pour les produits plastiques transformés obtenus à partir de ces granulats.

### Exemple 4

Dans cet exemple, on produit des granulés de formulations FI1, FI2 et FI3. Dans laquelle le PLA (B2) est remplacé par un matériau polymère commercialisé par la société Novamont sous la dénomination MATER-BI^{®} EF04P. C'est un matériau à base d'amidon de maïs qui est mélangé avec d'autres plastiques d'origine pétrochimique comme par exemple le produit commercialisé par la société BASF sous la dénomination EcoFlex^{®} FC 1200 (cf § [0057]).

La formulation FI1 comprend 100 % en poids MATER-BI^{®} EF04P et 0% en poids de carbonate de calcium (A) mis en oeuvre selon l'invention et défini dans l'exemple 1.

La formulation FI2 comprend 90 % en poids MATER-BI^{®} EF04P et 10% en poids de carbonate de calcium (A) mis en oeuvre selon l'invention et défini dans l'exemple 1.

La formulation FI3 comprend 80 % en poids MATER-BI^{®} EF04P et 20% en poids de carbonate de calcium (A) mis en oeuvre selon l'invention et défini dans l'exemple 1.

Les granulés de formulation FI1, FI2,FI3 sont obtenus par le procédé défini à l'exemple 1.

Ces granulés sont transformés par extrusion gonflage en un film de largeur de 250 mm et d'épaisseur de 16 microns. La machine utilisée est une extrudeuse de laboratoire fabriquée et commercialisée par la société italienne DIANI. La température de la vis d'extrusion est de 270°C et sa vitesse de 60 tr/min. Le refroidissement est effectué à 1300 tr/min, le tirage à 6,4 tr/min et l'enroulage à 7 tr/min.

Les propriétés mécaniques du film sont les suivantes :

| | DART(1) | Déchirement(2) | Traction SL⁽³⁾ | | |
|---|---|---|---|---|---|
| | | | Allongement⁽⁵⁾ | Contrainte à la rupture⁽⁵⁾ | Force à la rupture⁽⁵⁾ |
| FI1 | 292 g | SL⁽³⁾ 186 cN | 485 % | 17,6 Mpa | 6,5 N |
| | | ST⁽⁴⁾ 186 cN | | | |
| FI2 | 372 g | SL 186 cN | 566 % | 25,8Mpa | 7,8N |
| | | ST 186cN | | | |
| FI3 | 416 g | S 186 cN | 557 % | 24,5 Mpa | 7,4N |
| | | ST 186cN | | | |
| (1) test de résistance au choc par la méthode par chute libre de projectile ISO 7765-1 | | | | | |
| (2) Détermination de la résistance au déchirement NF EN ISO 6383-1 Mars 2016 | | | | | |
| (3) sens longitudinal | | | | | |
| (4) sens transversal | | | | | |
| (5) ISO 527-1 527-2 527-3 Détermination des Propriétés en Traction de Films et Feuilles Plastiques | | | | | |

## Revendications

1. Procédé de préparation de granulés plastiques au moins partiellement biosourcés et au moins partiellement biodégradables, par extrusion/découpe,
comprenant les étapes suivantes:
- (1)- mise en oeuvre d'au moins un polymère bioplastique (B), de préférence choisi parmi les polyesters, et, plus préférablement encore dans le groupe comprenant - idéalement constitué par - l'acide polylactique (APL), le polybutylène adipate téréphtalate (PBAT), le polybutylène succinate (PBS) et leurs mélanges;
- (2)- éventuel séchage de (B) pour amener/maintenir son taux d'humidité [mesuré selon la norme ISO 787-2] à une valeur maximale de - en % en poids par rapport à la masse totale de (B) et dans un ordre croissant de préférence- 0,05 ; 0,04 ; 0,03 ; 0,02 ; 0,01;
- (3)-transfert de (B), éventuellement séché, vers une extrudeuse, de préférence au moyen d'un flux d'air sec dont le degré d'humidité est, de préférence, inférieur ou égal à 30%, et plus préférentiellement encore à 10%;
- (4)- éventuel mélange de (B) avec au moins un plastifiant (C) et/ou au moins un additif (D) ;
- (5)- introduction dans l'extrudeuse, de préférence une extrudeuse bi-vis ;
* de (B), dont le taux d'humidité [mesuré selon la norme ISO 787-2] est inférieur ou égal à - en % en poids par rapport à la masse totale de (B) et dans un ordre croissant de préférence- 0,05 ; 0,04 ; 0,03 ; 0,02 ; 0,01, éventuellement préalablement mélangé à (C) et/ou à (D);
* et, éventuellement, d'au moins un plastifiant (C) et/ou d'au moins un additif (D); la zone (Z1) de l'extrudeuse dans laquelle a lieu cette introduction, étant à une température T1 telle que : 40°C ≤ T1 ≤ 80°C ; de préférence 50°C ≤ T1 ≤ 70°C ; et, plus préférentiellement encore 55°C ≤ T1 ≤ 65°C;
- (6)- extrusion de (B), et, le cas échéant, mélange avec (C) et/ou avec (D), fondu(s), dans une zone (Z2) de l'extrudeuse à une température T2, telle que : 120°C ≤ T2 ≤ 210°C ; de préférence 140°C ≤ T2 ≤ 190°C ; et, plus préférentiellement encore 150°C ≤ T2 ≤ 180°C;
- (7)- introduction de (A) dans l'extrudeuse, en au moins une fois et à au moins une zone (Z), de préférence à deux zones (Z3, Z4), ou trois zones (Z3, Z4, Z5), de l'extrudeuse; chacune de ces zones (Z3, Z4, Z5) de l'extrudeuse étant à une température Tx, identique ou différente - de préférence identique - et telle que: 120°C ≤ T2 ≤ 210°C ; de préférence 140°C ≤ T2 ≤ 190°C ; et, plus préférentiellement encore 150°C ≤ T2 ≤ 180°C;
- (8)- transfert sous pression de l'extrudat vers une filière, de préférence au moyen d'une extrudeuse monovis dans une zone (Z'1) de laquelle règne une température T'1 telle que : 130°C ≤ T'1 ≤ 200°C ; de préférence 140°C ≤ T'1 ≤ 190°C ; et, plus préférentiellement encore 150°C ≤ T'1 ≤ 180°C;
- (9)-passage de l'extrudat transféré sous pression dans une filière à la sortie de laquelle on récupère un produit extrudé, comprenant, de préférence, au moins un jonc; la filière étant chauffée à une température Tf telle que : 160°C ≤ Tf ≤ 260°C ; de préférence 180°C ≤ Tf ≤ 240°C ; et, plus préférentiellement encore 200°C ≤ Tf ≤ 220°C;
- (10)-éventuel refroidissement du produit extrudé;
- (11)- découpe en granulés du produit extrudé, de préférence, au moyen d'un granulateur sous eau, à une température T4 comprise entre 30 et 80 °C, de préférence entre 40 et 60 °C;
- (12)- séchage des granulés, de préférence, au moyen d'une centrifugeuse ;
- (13)- éventuel tamisage des granulés;
- (14)- éventuel séchage additionnel des granulés ;
- (15)- conditionnement en conteneur(s) étanche(s) des granulés.

2. Procédé selon la revendication 1 **caractérisé en ce qu'**il comprend une étape (4.1) de réglage du débit d'alimentation de l'extrudeuse en polymère bioplastique (B) selon l'étape (5), ce réglage étant, d'une part, préférablement effectué par le biais d'un dosage, avantageusement pondéral, de (B), et, d'autre part, plus préférablement encore, choisi pour limiter le temps de transfert de l'étape (4) a une valeur maximale de 15 min, de préférence 10 min, et, plus préférablement encore 5 min.

3. Procédé selon la revendication 1 ou 2 **caractérisé en ce que** l'étape (8) de transfert sous pression de l'extrudat est effectuée au moyen d'une pompe à engrenages.

4. Procédé de transformation de matières plastiques, de préférence choisi dans le groupe comprenant le thermoformage, l'injection, l'injection soufflage, l'extrusion, l'extrusion gonflage, l'extrusion soufflage, l'expansion moulage, dans lequel la matière première est constituée par des granulés plastiques obtenus par le procédé selon l'une au moins des revendications 1 à 3.

## Patentansprüche

1. Verfahren zur Herstellung von wenigstens teilweise biobasiertem und wenigstens teilweise biologisch abbaubarem Kunststoffgranulat durch Extrusion/Schneiden, das die folgenden Schritte umfasst:
(1) Verarbeitung wenigstens eines Bioplastikpolymers (B), bevorzugt gewählt aus Polyestern und stärker bevorzugt aus der Gruppe, umfassend - idealerweise bestehend aus - Polymilchsäure (PLA), Polybutylenadipatterephthalat (PBAT), Polybutylensuccinat (PBS) und deren Mischungen,
(2) gegebenenfalls Trocknen von (B), um seinen Feuchtigkeitsgehalt (gemessen gemäß der Norm ISO 787-2) auf einen Höchstwert von - in Gew.-%, bezogen auf die Gesamtmasse von (B) und in aufsteigender Reihenfolge, bevorzugt - 0,05; 0,04; 0,03; 0,02; 0,01 zu bringen/aufrechtzuerhalten,
(3) Überführung des gegebenenfalls getrockneten (B) in einen Extruder, bevorzugt mittels eines trockenen Luftstroms, dessen Feuchtigkeitsgrad bevorzugt kleiner oder gleich 30 % und stärker bevorzugt 10 % ist,
(4) gegebenenfalls Mischen von (B) mit wenigstens einem Weichmacher (C) und/oder wenigstens einem Zusatzstoff,
(5) Einbringen in den Extruder, bevorzugt einen Doppelschneckenextruder
• von (B), dessen Feuchtigkeitsgehalt (gemessen gemäß der Norm ISO 787-2) kleiner oder gleich - in Gew.-% bezogen auf die Gesamtmasse von (B) und in aufsteigender Reihenfolge bevorzugt - 0,05; 0,04; 0,03; 0,02; 0,01 ist, gegebenenfalls vorher mit (C) und/oder (D) gemischt,
• und gegebenenfalls wenigstens einem Weichmacher (C) und/oder wenigstens einem Zusatzstoff (D),
wobei die Zone (Z1) des Extruders, in der diese Einführung stattfindet, eine Temperatur T1 aufweist, die wie folgt ist: 40 °C ≤ T1 ≤ 80 °C, bevorzugt 50 °C ≤ T1 ≤ 70 °C; und stärker bevorzugt 55 °C ≤ T1 ≤ 65 °C,
(6) Extrudieren von (B) und gegebenenfalls Mischen mit geschmolzenem (C) und/oder geschmolzenem (D) in einer Zone (Z2) des Extruders bei einer Temperatur T2, wie zum Beispiel: 120 °C ≤ T2 ≤ 210 °C; bevorzugt 140 °C ≤ T2 ≤ 190 °C; und stärker bevorzugt 150 °C ≤ T2 ≤ 180 °C,
(7) Einführen von (A) in den Extruder, wenigstens einmal und in wenigstens einer Zone (Z), bevorzugt in zwei Zonen (Z3, Z4) oder drei Zonen (Z3, Z4, Z5) des Extruders, wobei jede dieser Zonen (Z3, Z4, Z5) des Extruders eine Temperatur Tx aufweist, die gleich oder unterschiedlich ist, bevorzugt gleich, und wie folgt: 120 °C ≤ T2 ≤ 210 °C; bevorzugt 140 °C ≤ T2 ≤ 190 °C; und stärker bevorzugt 150 °C ≤ T2 ≤ 180 °C,
(8) Überführen des Extrudats unter Druck in eine Düse, bevorzugt mittels eines Einschneckenextruders in einer Zone (Z'1), in der eine Temperatur T'1 von 130 °C ≤ T'1 ≤ 200 °C; bevorzugt 140 °C ≤ T'1 ≤ 190 °C; und stärker bevorzugt 150 °C ≤ T'1 ≤ 180 °C herrscht,
(9) Durchleiten des unter Druck übertragenen Extrudats durch eine Düse, an deren Ausgang man ein extrudiertes Produkt gewinnt, das bevorzugt wenigstens einen Strang umfasst, wobei die Düse auf eine Temperatur Tf wie folgt erhitzt wird: 160 °C ≤ Tf ≤ 260 °C; bevorzugt 180 °C ≤ Tf ≤ 240 °C; und stärker bevorzugt 200 °C ≤ Tf ≤ 220 °C,
(10) Eventuelles Abkühlen des extrudierten Produkts,
(11) Schneiden des extrudierten Produkts in Granulat, bevorzugt mittels eines Unterwassergranulators bei einer Temperatur T4 zwischen 30 und 80 °C, bevorzugt zwischen 40 und 60 °C;
(12) Trocknen des Granulats, bevorzugt mittels einer Zentrifuge,
(13) gegebenenfalls Sieben des Granulats,
(14) gegebenenfalls zusätzlich Trocknen des Granulats,
(15) Verpacken des Granulats in einem oder mehreren dichten Behältern.

2. Verfahren nach Anspruch 1, **dadurch gekennzeichnet, dass** es einen Schritt (4.1) zur Einstellung der Zufuhrmenge von Bioplastikpolymer (B) zum Extruder gemäß Schritt (5) umfasst, wobei diese Einstellung einerseits bevorzugt durch eine vorteilhafterweise gewichtsbezogene Dosierung von (B) erfolgt und andererseits, stärker bevorzugt, so gewählt wird, dass die Transferzeit von Schritt (4) auf einen Höchstwert von 15 min, bevorzugt 10 min und stärker bevorzugt 5 min, begrenzt wird.

3. Verfahren nach Anspruch 1 oder 2, **dadurch gekennzeichnet, dass** der Schritt (8) der Druckförderung des Extrudats mittels einer Zahnradpumpe durchgeführt wird.

4. Verfahren zur Verarbeitung von Kunststoffen, bevorzugt gewählt aus der Gruppe, umfassend Thermoformen, Spritzgießen, Spritzblasen, Extrudieren, Blasextrusion, Blasextrusionsformen, Schäumformen, wobei das Ausgangsmaterial aus Kunststoffgranulat besteht, das durch das Verfahren nach wenigstens einem der Ansprüche 1 bis 3 erhalten wird.

## Claims

1. A method for preparing at least partially biodegradable plastic granules, by extrusion/cutting, comprising the following steps:
- (1)- implementation of at least one bioplastic polymer (B), preferably selected from polyesters, and, even more preferably from the group comprising - ideally consisting of - polylactic acid (PLA), polybutylene adipate terephthalate (PBAT), polybutylene succinate (PBS) and mixtures thereof;
- (2)- optional drying of (B) to bring/maintain its humidity level [measured according to ISO 787-2 standard] at a maximum value of - in % by weight relative to the total mass of (B) and in increasing order of preference - 0.05; 0.04; 0.03; 0.02; 0.01;
- (3)- transfer of (B), optionally dried, to an extruder, preferably by means of a flow of dry air whose humidity degree is, preferably, less than or equal to 30%, and even more preferably to 10%;
- (4)- optional mixture of (B) with at least one plasticiser (C) and/or at least one additive (D);
- (5)- introduction into the extruder, preferably a twin-screw extruder,
* of (B), whose humidity level [measured according to ISO 787-2 standard] is less than or equal to - in % by weight relative to the total mass of (B) and in an increasing order of preference - 0.05; 0.04; 0.03; 0.02; 0.01, optionally previously mixed with (C) and/or (D);
* and, optionally, of at least one plasticiser (C) and/or at least one additive (D); the zone (Z1) of the extruder in which this introduction takes place, being at a temperature T1 such that: 40°C ≤ T1 ≤ 80°C; preferably 50°C ≤ T1 ≤ 70°C; and, even more preferably 55°C ≤ T1 ≤ 65°C;
- (6)- extrusion of (B), and, where appropriate, mixture with (C) and/or with (D), melted, in a zone (Z2) of the extruder at a temperature T2, such that: 120°C ≤ T2 ≤ 210°C; preferably 140°C ≤ T2 ≤ 190°C; and, even more preferably 150°C ≤ T2 ≤ 180°C;
- (7)- introduction of (A) into the extruder, at least once and in at least one zone (Z), preferably at two zones (Z3, Z4), or three zones (Z3, Z4, Z5), of the extruder; each of these zones (Z3, Z4, Z5) of the extruder being at a temperature Tx, identical or different - preferably identical - and such that: 120°C ≤ T2 ≤ 220°C; preferably 140°C ≤ T2 ≤ 190°C; and, even more preferably 150°C ≤ T2 ≤ 180°C;
- (8)- transfer under pressure of the extrudate to a die, preferably by means of a single-screw extruder in a zone (Z' 1) in which a temperature T'1 reigns such that: 130°C ≤ T'1 ≤ 200°C; preferably 140°C ≤ T'1 ≤ 190°C; and, even more preferably 150°C ≤ T'1 ≤ 180°C;
- (9)-passage of the extrudate transferred under pressure into a die at the outlet of which an extruded product is recovered, preferably comprising at least one rod; the die being heated to a temperature Tf such that: 160°C ≤ Tf ≤ 260°C; preferably 180°C ≤ Tf ≤ 240°C; and, even more preferably 200°C ≤ Tf ≤ 220°C;
- (10)- optional cooling of the extruded product;
- (11)- cutting of the extruded product into granules, preferably, by means of a granulator under water, at a temperature T4 comprised between 30 and 80°C, preferably between 40 and 60°C;
- (12)- drying of the granules, preferably, by means of a centrifuge;,
- (13)- optional sieving of the granules;
- (14)- optional additional drying of the granules
- (15)- packaging of the granules in sealed container(s).

2. The method according to claim 1, **characterised in that** it comprises a step (4.1) of adjusting the feed rate of the bioplastic polymer extruder (B) according to step (5), this adjustment being, on the one hand, preferably performed by means of a dosage, advantageously a weight dosage, of (B), and, on the other hand, even more preferably, chosen to limit the transfer time of step (4) has a maximum value of 15 min, preferably 10 min, and even more preferably 5 min.

3. The method according to claim 1 or 2, **characterised in that** step (8) of transferring the extrudate under pressure is performed by means of a gear pump.

4. The method for transforming plastic materials, preferably selected from the group comprising thermoforming, injection, injection blow moulding, extrusion, extrusion-inflation, extrusion blow moulding, expansion moulding, in which the raw material consists of plastic granules obtained by the method according to at least one of claims 1 to 3.
